(19) Europäisches Patentamt
European Patent Office
Office européen des brevets

(11) **EP 2 811 709 B1**

(12) **EUROPEAN PATENT SPECIFICATION**

(45) Date of publication and mention
of the grant of the patent:
**13.09.2017 Bulletin 2017/37**

(51) Int Cl.:
*H04L 29/06* *(2006.01)*

(21) Application number: **13305743.0**

(22) Date of filing: **04.06.2013**

(54) **QUALITY OF EXPERIENCE MEASUREMENTS IN A UNICAST LINEAR TELEVISION NETWORK**

MESSUNGEN DER ERFAHRUNGSQUALITÄT IN EINEM LINEAREN UNICAST-FERNSEHNETZ

QUALITÉ DE MESURES D'EXPÉRIENCE DANS UN RÉSEAU DE TÉLÉVISION LINÉAIRE
D'UNIDIFFUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.12.2014 Bulletin 2014/50**

(73) Proprietor: **ALCATEL LUCENT
92100 Boulogne-Billancourt (FR)**

(72) Inventors:
• **Huysegems, Raf
2800 Walem (BE)**
• **Lou, David
2640 Mortsel (BE)**

(74) Representative: **ALU Antw Patent Attorneys
Copernicuslaan 50
2018 Antwerpen (BE)**

(56) References cited:
**EP-A1- 2 525 587      WO-A1-2011/047335**

**Description**

The present invention relates to a method for remotely reconstructing a buffer filling level of a hypertext transfer protocol adaptive streaming (HAS) client in a linear television (TV) network that connects a content delivery network (CDN) or content server to a plurality of HAS clients, wherein each HAS client uses a buffer having a predetermined maximum filling level. The invention further relates to a method for remotely performing Quality of Experience (QoE) measurements relating to a unicast linear television HAS session of a client in such network. In addition, the present invention relates to a node to be used in such network.

In unicast communication, individual sessions are used to communicate data to clients. This is in strong contrast to broadcast communication in which a server distributes a single message to a plurality of clients.

Linear television is a television service where the viewer has to watch a scheduled TV program at the particular time it is offered, and on a particular channel it is presented on. This is in strong contrast to Video-on-Demand, wherein a user can choose to watch a program at an arbitrary time.

Today, Internet-based video streaming service is offered over the HTTP protocol. As the quality of service of the Internet as a transport network is substantially "best effort", protocols have been devised that take advantage to the maximal extent of the bandwidth available between a server and a client at any given time by dynamically switching between different levels of video quality for the streamed content. HTTP adaptive streaming is an example. Accordingly, at a time when the available bandwidth is high, for instance due to a decreased level of overall network traffic, it is advantageous to stream video encoded at a relatively high quality, representing graphics with a high data rate and/or resolution and/or a high frame rate. Similarly, at a time when the available bandwidth is low, for instance due to an increased level of overall network traffic, it is advantageous to stream video encoded at a relatively low data rate, representing graphics with a low resolution and/or a low frame rate. Using this dynamic switching between different levels of video quality, freezes can be avoided or minimized.

HTTP Adaptive streaming is an emerging technique for the delivery of video. It is supported by industry leaders such as Microsoft (Smooth-streaming) and Apple (Live-streaming). One of the advantages of HAS lies in the fact that the existing infrastructure for HTTP web-content (including HTTP servers and proxies, CDNs, and so on) can be reused for video distribution.

Due to the growing popularity of HAS as a novel, improved video delivery solution, providers (content-provider, ISPs, CDN-provider) wish to track the delivered quality to the consumer.

To allow dynamic switching between video encoding rates, video or content servers generate separate video files (e.g., video clips or chunks encoded as files according to a file format such as MP4) for different time-segments of the streamed content, each of which is offered to the client in a variety of qualities, i.e. encoded at different data rates. These files are referred to as segments of a content stream.

The HAS client assesses the available bandwidth of the downstream link from CDN to the client from time to time, typically after each segment is downloaded, or on a continuous basis, and requests the appropriate version of the next required video fragment in accordance with that assessment. For example, the client requests the version encoded at the highest data rate that is inferior to the presently measured downstream data rate. Alternatively, the HAS client takes into account statistical information about channel bandwidth fluctuations to determine the most appropriate encoding rate. Furthermore, the buffer filling level is an important parameter for the client to decide the quality of the next segment.The different segments to be selected by the HAS client may be addressed by means of dedicated Uniform Resource Locators (URLs). In this manner, the client simply has to select the appropriate URL for each new segment. The available versions and their URLs are documented by the CDN along with associated metadata in a playlist or "manifest" file.

To avoid picture freezes, the HAS client will apply a play out buffer that can range between 7 and 30 seconds. Based on a number of criteria such as the actual buffer filling and the measured transfer-time of the requested segments, the HAS client will decide the quality level of the next segment that must be downloaded. The play out buffer can be generated by intentionally downloading older content than content that is currently generated. For instance, assume that a client has a maximum buffer filling level of 20 seconds. Once a channel is selected, the client will start downloading content that was generated 20 seconds ago. The play out of the content will therefore always lag at least 20 seconds compared to the moment at which the content became available. This allows a buffer to be filled with a maximum of 20 seconds of content.

WO 2012/156224 discloses a method to remotely perform Quality of Experience (QoE) measurements for a HTTP Adaptive streaming session. It relies on capturing packets between the HAS client and the CDN to determine the buffer filling level at the HAS client. In particular, it requires the determination of various time stamps.

Unfortunately, the known method is not without drawbacks. Firstly, the required time stamps are not always available, for instance when an existing log file from the CDN is used for reconstructing purposes or when segments are downloaded from a cache within the network of which the packets cannot be captured. Secondly, the algorithm to be used for the reconstructing is rather complex, limiting its applicability to determine QoE for a plurality of HAS sessions simultaneously.

An object of the present invention is to provide a method for remotely reconstructing a buffer filling level of a hypertext transfer protocol adaptive streaming (HAS) client in a unicast linear television (TV) network that connects a content delivery network (CDN) or a content server to a plurality of HAS clients, wherein each HAS client uses a buffer having a predetermined maximum filling level in which the abovementioned drawbacks do not occur or at least to a lesser extent.

According to a first aspect, this object has been achieved with a method as defined in claim 1.

The method according to the present invention comprises the steps of:

a) monitoring network traffic in time (t);

b) detecting a steady state in which the HAS client to be characterized downloads segments at the same rate as it plays out segments;

c) while in the steady state, starting the monitoring of the HAS client to be characterized at a starting point in time (to) by determining for the HAS client to be characterized, which segment in a content stream is currently requested, is currently downloading or has most recently been downloaded;

d) determine which HAS client has downloaded or requested the segment first from among the plurality of HAS clients;

e) computing a production time line for segments of the content stream based on the time at which the first HAS client has downloaded or requested the segment;

f) determining a retrieval delay $R_d$ for the segment by subtracting, using the production time line, the time at which this segment is produced from the time at which the segment is requested by, is downloading to or has most recently been downloaded to the HAS client to be characterized;

g) calculating the steady state net freeze delay at to using:

$$F_0 \; = \; R_d$$

The method further comprises the steps of:

h) after the starting point in time (t > to), determining the retrieval delay $R_d$ for a segment by subtracting, using the production time line, the time at which this segment is produced from the time at which the segment is requested by, is downloading to or has most recently been downloaded to the HAS client to be characterized;

i) determining that playback at the HAS client to be characterized freezes when the calculated retrieval delay exceeds the sum of the steady state net freeze delay and the maximum predetermined maximum filling level ($\Delta$) of the HAS client to be characterized, and accumulating the time that playback is frozen as the accumulated freeze delay (F);

j) determining that playback at the HAS client to be characterized skips when a skip in segment sequence numbers is detected and determining the amount of playback skip from timing information and/or sequence numbers corresponding to the segments, and accumulating the time that playback is skipped as the accumulated skip delay (S);

k) calculating the buffer filling level (B) as a function of time using:

$$B(t) \; = \; \Delta \; + \; (F(t)+F_0) \; - \; R_d(t) \; - \; S(t)$$

Here, F(t) denotes the freeze accumulated after $t_0$.

Contrary to WO 2012/156224, the present invention is limited to linear television. The applicant has realized that in most practical systems, a CDN or content server will be simultaneously connected to a large number (>1000) of HAS clients. A typical application could for instance be a live football match unicasting or a prerecorded TV show that is on a linear TV channel. Consequently, of those HAS clients, it is almost certain that at least a few clients have excellent bandwidth to communicate with the CDN or content server and have not suffered from any freezes or skips while playing out content. For these clients, the buffer will be full and new segments are downloaded almost directly after they are generated. Moreover, these clients will download the segments at the highest resolution and/or bit rate available. According to the invention, this information can be used to determine the buffer filling level of a HAS client to be characterized. More in particular, this information can be used to determine the time at which a given segment was first made available in the network.

Determining the time at which a segment is requested by, is downloading to or has most recently downloaded to the HAS client to be characterized is preferably calculated using a time stamp pertaining to:

capturing a HTTP-GET request from the HAS client to be characterized pertaining to the segment; and/or

capturing a HTTP header indicating a start of transferring the segment to the HAS client to be characterized; and/or
receiving the last byte of the segment, wherein a size of the segment is extracted from the HTTP header.

When capturing packets that are transferred over the network, a time stamp can be attributed to the time at which a packet is actually captured. Several different types of packets on different layers comprise information regarding the packet that is requested, is downloading to or has most recently downloaded to the HAS client to be characterized. For instance, a HTTP-GET request comprises a URL that refers to a particular segment in a particular quality level such as resolution and/or bit rate. This information can be extracted from the payload of a packet. The packet header comprises information regarding the origin and/or destination of the packet, thereby allowing the request to be assigned to the HAS client to be characterized.

Apart from a HTTP request, a HTTP header can be captured that is related to the start of transfer of the relevant segment. Such packet comprises the address, such as the IP address, of the HAS client to be characterized and has at least a part of the relevant segment as its payload. Furthermore, the HTTP header comprises information regarding the size of the segment. This makes it possible to count the bytes that are transferred to the HAS client and to determine the moment in time when the last byte pertaining to a particular segment will be received.

The same techniques can be applied to compute the production time line for segments of the content stream based on the time at which the first HAS client has downloaded or requested the segment. More in particular, a time stamp can be determined pertaining to:

capturing a HTTP-GET request from the first HAS client pertaining to the segment; and/or
capturing a HTTP header indicating a start of transferring the segment to the first HAS client to be characterized; and/or
receiving the last byte of the segment, wherein a size of the segment is extracted from the HTTP header.

The first HAS client is a client or clients that has/have excellent bandwidth. Consequently, segments that are produced are downloaded almost instantly. More in particular, because of the buffer for these clients is completely filled, they can still play the content in the buffer should the bandwidth suddenly drop. As such, they are less susceptible to delays or skips and download segments in the highest resolution and/or bandwidth available. Consequently, the time at which a segment is produced can be directly determined from the time at which such first HAS client requests that segment.

According to the present invention, the presence of a first client is ensured because a plurality of HAS clients is served by the network. It should be appreciated by the skilled person that the accuracy offered by the present invention may improve when more clients are connected.

The present invention allows to determine the buffer filling level for a plurality of different HAS clients simultaneously. This is made possible because only a limited amount packet capturing processes are required and because the required algorithm is relatively simple. Moreover, some of the steps coincide. For instance, for a particular segment, the same first HAS client can be assumed, thereby requiring only a single packet capturing process that can be used for a plurality of HAS clients.

Instead of capturing packets that are transferred over the network, a log file may be obtained from the CDN. Such log file typically comprises entries that associate segments with time at which these segments were requested by and/or downloaded to each of the plurality of HAS clients. Such log file can then be used to determine the production time line. Moreover, it may be used to determine the retrieval delay without any capturing process. The log file can therefore be used for a post facto re-construction of the buffer. More in particular, the buffer for a plurality of HAS clients can be analyzed in this manner.

Information regarding the predetermined maximum buffer filling level may be communicated between the CDN or content server and a HAS client. Consequently, the predetermined maximum filling may be determined remotely by capturing this information. Alternatively, this information may be available at the node that performs the remote re-construction. The predetermined maximum filling level is preferably identical for each of the plurality of HAS clients. It may be communicated as part of the manifest file and/or it can be provided as pre-set information.

According to a second aspect, the present invention provides a method for remotely performing Quality of Experience (QoE) measurements relating to a unicast linear television hypertext transfer protocol adaptive streaming (HAS) session of a HAS client in a unicast linear television (TV) network that connects a content delivery network (CDN) or content server to a plurality of HAS clients, wherein each HAS client uses a respective buffer having a predetermined maximum filling level.

According to the invention, the method comprises the steps of:

calculating a buffer filling level of the client as defined above.

The method may further comprise obtaining a previously generated manifest file, the manifest file comprising a list of segments to be downloaded and resolution information indicating the resolution and/or bit rate in which the segments are available and information regarding the uniform resource locators (URLs) to be used for accessing these segments. Moreover, the method may further comprise:

capturing HTTP-GET requests from the HAS client to be characterized and/or obtaining a log file from the CDN to identify the segments and the resolution and/or bit rate thereof;
reconstructing the stream as perceived at the HAS client to be characterized using the identified segments and the calculated buffer filling level; and
performing a QoE measurement on the reconstructed stream.

The QoE measurement may be performed simultaneously for a plurality of different HAS clients. Information from these QoE measurements may be used to adjust available caching storage and/or bandwidth in the CDN. QoE measurements can also be applied for troubleshooting e.g. after a complaint of a user to the helpdesk. Based on the QoE measurements of multiple clients, possible bandwidth bottlenecks can be determined in the network. Last but not least, real time monitoring information could be used to adjust the priority of the packets for a particular client or user.

According to a third aspect, the present invention provides a node for a unicast linear television (TV) network that connects a content delivery network (CDN) or content server to a plurality of hypertext transfer protocol adaptive streaming (HAS) clients, said node being communicatively coupled to the network to allow it to capture packets in the network, said node preferably comprising a packet capture unit for capturing packets on a TCP or HTTP level, and/or a CDN log file input unit for obtaining a CDN log file, the node further comprising a processor that is configured to perform the method as described above.

Next, the invention will be described in more detail referring to the attached drawings in which:

Figure 1 illustrates a unicast network comprising a node according to the present invention; and
Figure 2 illustrates how the buffer filling level can be calculated for a content stream to a HAS client to be characterized.

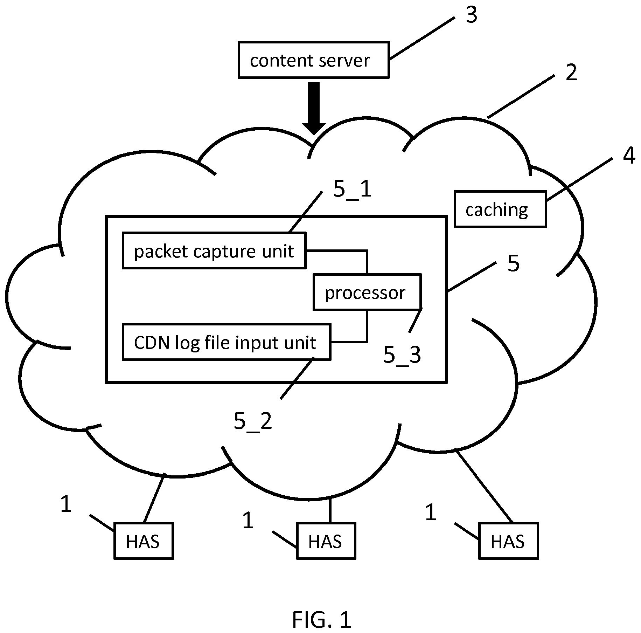

Figure 1 schematically illustrates how a plurality of HAS clients 1 are connected to a CDN 2 which receives content from a content server 3. CDN 2 comprises caching 4 in which already produced segments may be stored to improve the overall efficiency.

CDN 2 further comprises a node 5 in which the buffer reconstruction according to the present invention is implemented. Node 5 may be realized in a distributed manner such that only a part of the functionality is realized within CDN 2. In an embodiment, node 5 comprises a packet capture unit 5_1 for capturing packets on a TCP or HTTP level, and a CDN log file input unit 5_2 for obtaining a CDN log file. Node 5 may further comprise a processor 5_3 that is configured to perform the method as described above. Processor 5_3 is communicatively coupled to packet capture unit 5_1 and CDN log file input unit 5_2 and may be implemented outside of network 2. It should be apparent to the skilled person that node 5 can be placed anywhere in the network as long as it is able to capture and monitor the traffic required to perform the method of the present invention.

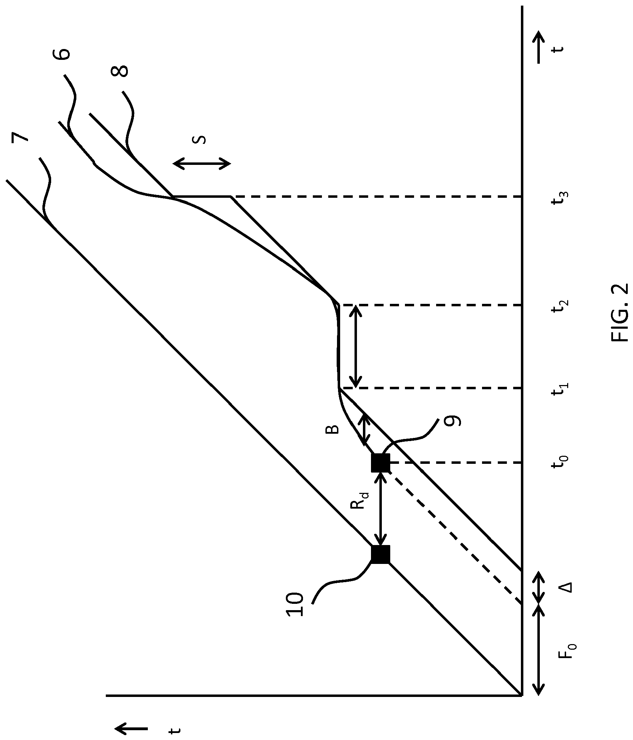

Figure 2 illustrates an example of calculating a buffer filling level in accordance with the present invention.

Here, line 6 corresponds to the time at which segments are downloaded by the HAS client to be characterized, i.e. the content download line, line 7 corresponds to the time at which these segments are assumed to be produced or made available in CDN 2, i.e. the production time line, and line 8 corresponds to the playing out of segments, i.e. the content consumption line. Both the x-axis and the y-axis use time coordinates. Here, the y-axis represents content expressed in time.

The characterization starts by detecting a steady state in which the HAS client to be characterized downloads segments at the same rate as it plays out segments. In a steady state, the production time line, the content download line, and the content consumption line are all parallel. Furthermore, in the steady state, the buffer is assumed to be filled to its limit. Most HAS clients are configured to choose the highest resolution and/or bit rate of the segments while still maintaining a completely filled buffer. Hence, when a steady state is determined, this implies that the buffer is completely filled. It should be understood by the skilled person, that the definition steady state suggests that the rate at which segments are downloaded has been constant for a predetermined amount of time. This time can be set or is predefined.

While in the steady state, the monitoring of the HAS client to be characterized is started at a starting point in time (to) by determining for the HAS client to be characterized, which segment in a content stream is currently requested, is currently downloading or has most recently been downloaded. This segment is indicated by a square 9.

Among the plurality of HAS clients, there will be one or more clients that have excellent bandwidth. As such, it is possible to determine which HAS client has downloaded or requested the segment first from among this plurality of HAS clients. This allows a production time line for segments of the content stream to be computed based on the time at which the first HAS client has downloaded or requested the segment. This is indicated by a square 10 in figure 2.

This square corresponds to the same y-axis value as square 9 as both squares relate to the same content. For example, squares 9 and 10 relate to content representative for an event at 11:30AM.

It is assumed that square 10 indicates the time at which the content it represents is produced. Hence, a line at an 45 degree angle can be drawn through square 10 to represent the content production time line.

As a next step, a retrieval delay $R_d$ for the segment indicated by square 9 is determined by subtracting, using the production time line, the time at which this segment is produced from the time at which the segment is requested by, is downloading to or has most recently been downloaded to the HAS client to be characterized.

Content play out by the HAS client to be characterized may have been frozen in the past. The client may also have skipped content to make up for the freeze delay. If the HAS client to be characterized has not suffered from either freezing or skipping, and the HAS client is in a steady state, consumption line 8 will be parallel to production line 7, the latter coinciding with content download line 6.

Figure 2 illustrates a situation in which the HAS client did suffer from freezing and/or skipping. Consequently, production time line 7 and content download line 6 will be shifted with respect to each other. This shift allows a non-zero steady state net freeze delay to be computed using:

$$F_0 = R_d$$

After this initial measurement, the method continues to determine the retrieval delay $R_d$ for subsequent segments by subtracting, using the production time line, the time at which a segment is produced from the time at which the segment is requested by, is downloading to or has most recently been downloaded to the HAS client to be characterized. In figure 2, the retrieval delay corresponds to the horizontal distance between production line 7 and download line 6. Additionally, the buffer filling level corresponds to the horizontal distance between the content download line 6 and the content consumption line 8.

When the content download line 6 is less steep than production line 7, content is produced at a rate higher than it is downloaded. This will inevitably result in the lowering of the buffer filling level. Ultimately, as illustrated at $t_1$, the content download line 6 will coincide with content consumption line 8. In other words, the buffer filling level is zero. At $t_1$, the buffer is empty and no further segments are downloaded. Consequently, play out freezes.

According to the invention, playback at the HAS client is determined to be frozen when the calculated retrieval delay exceeds the sum of the steady state net freeze delay and the maximum predetermined maximum filling level ($\Delta$) of the HAS client to be characterized.

Typically, a client will wait a certain amount of time before playing out a segment after it has become available. This allows the client to build up a buffer. Within the context of the present invention, this delay is assumed to be equal to the maximum buffer filling level. The skilled person understands that small corrections may be applied to account for the delay between content download and content play. Such corrections, performed by adding a parameter to $\Delta$, are not excluded from the present invention.

Play out may have been frozen in the past as represented by $F_0$. This means that a client lags an additional amount of $F_0$. Therefore, if a client requests segments with a retrieval delay that exceeds the sum of the steady state net freeze delay and the maximum predetermined maximum filling level ($\Delta$), a freeze is detected.

The time that playback is frozen is accumulated as the accumulated freeze delay (F). In this manner, the length of the period in which the play out has been frozen can be determined.

At $t_2$, content is again downloaded and at a rate exceeding the rate at which the content is played out. As a result, the buffer starts to fill up. At $t_3$, the client decides, either automatically or via user input, to skip content. This means that part of the buffer is discarded.

According to the invention, is it determined that playback at the HAS client to be characterized skips when a skip in segment sequence numbers is detected and determining the amount of playback skip from timing information and/or sequence numbers corresponding to the segments. The time that playback is skipped is accumulated as the accumulated skip delay (S). In this manner, the amount of content in time which is skipped can be determined.

According to the invention, the buffer filling level (B) can be calculated as a function of time using:

$$B(t) = \Delta + (F(t) + F_0) - R_d(t) - S(t)$$

Here, F(t) represents the amount of freeze accumulated after $t_0$, i.e. $F(t=t_0)=0$.

Hence, by first detecting a steady state, the buffer filling level can be determined for the remainder of the session. It should be noted, that for most players a steady state is most often achieved. In adaptive streaming, this is made possible by using lower resolution and/or bite rate segments. Even more, if a steady state for a given HAS session cannot be determined, this session can be qualified as having a poor quality.

In the above, the network is continuously monitored to determine which segments are requested and/or downloaded both by the HAS client to be characterized or by the first HAS client or clients. In an embodiment, information regarding segments is obtained by capturing packets in the network and/or assigning time stamps to those packets or to the capturing process. For instance, a HTTP-GET request can be captured. Generally, the HTTP-GET request is formatted as comprising an URL (possibly including some parameters), a host (server), a user-agent (defining the client-browser and/or client OS) and some other parameters.

The URL in the HTTP-GET request indicates which segment to download in which resolution and/or bit rate. The request further comprises information regarding the server from which the segment is requested and information regarding the HAS client which issued the request.

Similarly, a HTTP header indicating a start of transferring a segment to a HAS client can be captured. The HTTP header comprises the "total size of the segment under transfer".

It should be appreciated by the skilled person that the invention is not limited to the examples and embodiments now presented but that the scope of the invention also covers the embodiments and their equivalents as described in the appended claims.

## Claims

1.  A method for remotely reconstructing a buffer filling level of a hypertext transfer protocol adaptive streaming, HAS, client in a unicast linear television, TV, network that connects a content delivery network, CDN, or a content server to a plurality of HAS clients, wherein said CDN or content server is configured to generate separate video files for different time-segments of a content stream, each video file being offered to the HAS clients in a variety of different encoding data rates, said video file constituting a segment of said content stream, wherein each HAS client uses a respective buffer having a predetermined maximum filling level, the method **characterised in that** the method comprising the steps of:

    a) monitoring network traffic in time "t";
    b) detecting a steady state in which the HAS client downloads segments of said content stream at the same rate as it plays out previously downloaded segments of said content stream;
    c) while in the steady state, starting, at a starting point in time "$t_0$", the monitoring of said HAS client by determining for the HAS client which segment in the content stream is currently requested, is currently downloading or has most recently been downloaded;
    d) determine which HAS client has downloaded or requested the determined segment first from among the plurality of HAS clients;
    e) computing a production time line for segments of the content stream based on the time at which the first HAS client has downloaded or requested the segment, wherein the production time line represents the time at which the segments of the content stream are assumed to be produced or made available in CDN or content server;
    f) determining a retrieval delay $R_d$ for the segment by subtracting the time at which this segment is produced, obtained from the production time line, from the time at which the segment is requested by, is downloading to or has most recently been downloaded to the HAS client to be characterized;
    g) calculating the steady state net freeze delay at $t_0$ using:

    $$F_0 \ = \ R_d$$

    the method further comprising:

    h) after the starting point in time "$t > t_0$", determining the retrieval delay $R_d$ for a segment by subtracting, using the production time line, the time at which this segment is produced from the time at which the segment is requested by, is downloading to or has most recently been downloaded to the HAS client,
    i) determining that playback at the HAS client freezes when the calculated retrieval delay exceeds the sum of the steady state net freeze delay and the maximum predetermined maximum filling level "$\Delta$" of the HAS client and accumulating the time that playback is frozen as the accumulated freeze delay "F";
    j) determining a segment sequence number for each downloaded segment, said sequence number being indicative for a position of said segment in the content stream, and determining that playback at the HAS skips when a skip in segment sequence numbers is detected between consecutively downloaded segments and determining the amount of playback skip from timing information and/or sequence numbers corresponding to the segments, and accumulating the time that playback is skipped as the accumulated skip delay "S"
k) calculating the buffer filling level "B" as a function of time using:

$$B(t) = \Delta + (F(t)+F_0) - R_d(t) - S(t)$$

wherein F(t) represents the amount of freeze accumulated after $t_0$.

2. The method of claim 1, wherein determining the time at which a segment is requested by, is downloading to or has most recently downloaded to the HAS client is calculated using a time stamp pertaining to:

capturing a HTTP-GET request from the HAS client pertaining to the segment; and/or
capturing a HTTP header indicating a start of transferring the segment to the HAS client and/or
receiving the last byte of the segment, wherein a size of the segment is extracted from the HTTP header.

3. The method of claim 1 of 2, wherein step e) is performed by determining a time stamp pertaining to:

capturing a HTTP-GET request from the first HAS client pertaining to the segment; and/or
capturing a HTTP header indicating a start of transferring the segment to the first HAS and/or
receiving the last byte of the segment, wherein a size of the segment is extracted from the HTTP header;
and subtracting the maximum buffer filling level of the first HAS client from this time stamp.

4. The method according to any of the previous claims, comprising simultaneously determining the buffer filling level for a plurality of different HAS clients.

5. The method as defined in any of the previous claims, wherein step d) comprises:

obtaining a log file from the CDN, said log file comprising entries that associate segments with time at which these segments were requested by and/or downloaded to each of the plurality of HAS clients.

6. The method according to any of the previous claims, wherein information regarding the predetermined maximum filling level is communicated between the CDN and a HAS client, the method further comprising remotely determining the predetermined maximum filling level by capturing this information.

7. The method according to any of the previous claims, wherein the predetermined maximum filling level is identical for each of the plurality of HAS clients.

8. The method according to claim 6 or 7, wherein the maximum filling level is communicated as part of the manifest file and/or is provided as pre-set information.

9. The method as defined in any of the previous claims, wherein the calculation of the buffer filling level of the remote HAS client is used for remotely performing Quality of Experience, QoE, measurements.

10. The method according to claim 9, further comprising obtaining a previously generated manifest file, said manifest file comprising a list of segments to be downloaded and resolution information indicating the resolution and/or bit rate in which the segments are available and information regarding the uniform resource locators, URL, to be used for accessing these segments, the method further comprising:

capturing HTTP-GET requests from the HAS client to be characterized and/or obtaining a log file from the CDN to identify the segments and the resolution and/or bit rate thereof;
reconstructing the stream as perceived at the HAS client to be characterized using the identified segments and the calculated buffer filling level; and
performing a QoE measurement on the reconstructed stream.

11. The method according to claim 10, comprising performing the QoE measurement simultaneously for a plurality of different HAS clients, and using information from these QoE measurements to adjust available caching storage and/or bandwidth in the CDN.

12. A node for a unicast linear television, TV, network that connects a content delivery network, CDN, or content server to a plurality of hypertext transfer protocol adaptive streaming, HAS, clients, said node being communicatively coupled to the network to allow it to capture packets in the network, said node preferably comprising a packet capture unit for capturing packets on a TCP or HTTP level, and/or a CDN log file input unit for obtaining a CDN log file, the node further comprising a processor that is configured to perform the method as described in any of the previous claims.

## Patentansprüche

1. Verfahren zum entfernten Wiederherstellen eines Pufferfüllpegels eines Hypertext-Übertragungsprotokoll-Adaptive-Streaming-, HAS-, Clients in einem linearen Unicast-Fernseh-, TV-, Netz, das ein Inhaltsauslieferungsnetz, CDN, oder einen Inhaltsserver mit einer Vielzahl von HAS-Clients verbindet, wobei das besagte CDN oder der Inhaltsserver ausgelegt ist, um separate Videodateien für unterschiedliche Zeitsegmente eines Inhaltsstroms zu erzeugen, jede Videodatei den HAS-Clients in einer Vielfalt an unterschiedlichen Codierdatenraten angeboten wird, die besagte Videodatei ein Segment des besagten Inhaltsstroms bildet, wobei jeder HAS-Client einen jeweiligen Puffer mit einem vorausbestimmten Maximalfüllpegel verwendet, wobei das Verfahren **dadurch gekennzeichnet ist, dass** es folgende Schritte umfasst

a) Überwachen den Netzverkehrs in einer Zeit "t";
b) Erkennen eines stationären Zustands, in dem der HAS-Client Segmente des besagten Inhaltsstroms in der gleichen Rate herunterlädt, wie zuvor heruntergeladene Segmente des besagten Inhaltsstroms ausgegeben werden;
c) während des stationären Zustands, Starten der Überwachung des besagten HAS-Clients zu einem Startzeitpunkt "$t_0$" durch Bestimmen für den HAS-Client, welches Segment im Inhaltsstrom aktuell angefordert wird, aktuell heruntergeladen wird oder zuletzt heruntergeladen wurde;
d) Bestimmen, welcher HAS-Client aus der Vielzahl von HAS-Clients das bestimmte Segment zuerst heruntergeladen oder angefordert hat;
e) Berechnen eines Produktionszeitplans für Segmente des Inhaltsstroms basierend auf der Zeit, zu der der erste HAS-Client das Segment heruntergeladen oder angefordert hat, wobei der Produktionszeitplan die Zeit darstellt, zu der angenommen wird, dass die Segmente des Inhaltsstroms produziert oder im CDN oder Inhaltsserver verfügbar gemacht werden;
f) Bestimmen einer Abfrageverzögerung $R_d$ für das Segment durch Subtrahieren der Zeit, zu der dieses Segment produziert wird, die man aus dem Produktionszeitplan erhält, von der Zeit, zu der das Segment von dem zu kennzeichnenden HAS-Client angefordert wird, heruntergeladen wird oder zuletzt heruntergeladen wurde;
g) Berechnen einer Nettoeinfrierverzögerung im stationären Zustand zu to mittels:

$$F_0 = R_d$$

wobei das Verfahren weiterhin Folgendes umfasst:

h) nach dem Startzeitpunkt "$t>t_0$", Bestimmen der Abfrageverzögerung $R_d$ für ein Segment durch Subtrahieren, unter Verwendung des Produktionszeitplans, der Zeit, zu der dieses Segment erzeugt wird, von der Zeit, zu der das Segment von dem HAS-Client angefordert wird, heruntergeladen wird oder zuletzt heruntergeladen wurde;
i) Bestimmen, dass die Wiedergabe beim HAS-Client einfriert, wenn die berechnete Abfrageverzögerung die Summe der Nettoeinfrierverzögerung im stationären Zustand und des vorausbestimmten Maximalfüllpegels "$\Delta$" des HAS-Clients übersteigt, und Akkumulieren der Zeit, in der die Wiedergabe eingefroren ist, als akkumulierte Einfrierverzögerung "F";
j) Bestimmen einer Segmentsequenzzahl für jedes heruntergeladene Segment, wobei die besagte Sequenzzahl bezeichnend ist für eine Position des besagten Segments in dem Inhaltsstrom, und Bestimmen, dass die Wiedergabe beim HAS übersprungen wird, wenn ein Überspringen in Segmentsequenzzahlen zwischen nacheinander heruntergeladenen Segmenten erkannt wird, und Bestimmen des Ausmaßes des Wiedergabeüberspringens aus Zeitinformationen und/oder Sequenzzahlen entsprechend den Segmenten, und Akkumulieren der Zeit, in der die Wiedergabe übersprungen wird, als akkumulierte Überspringverzögerung "S";
k) Berechnen des Pufferfüllpegels "B" als Funktion der Zeit mittels:

$$B(t) = \Delta + (F(t)+F_0) - R_d(t) - S(t)$$

wobei F(t) das akkumulierte Einfrierausmaß nach $t_0$ darstellt.

2. Verfahren nach Anspruch 1, wobei das Bestimmen der Zeit, zu der ein Segment von dem HAS-Client angefordert wird, heruntergeladen wird oder zuletzt heruntergeladen wurde, unter Verwendung eines Zeitstempels berechnet wird, betreffend:

Erfassen einer HTTP-GET-Anfrage von dem HAS-Client betreffend das Segment; und/oder
Erfassen eines HTTP-Headers, der einen Übertragungsstart des Segments an den HAS-Client angibt; und/oder
Empfangen des letzten Bytes des Segments, wobei eine Größe des Segments aus dem HTTP-Header extrahiert wird.

3. Verfahren nach Anspruch 1 von 2, wobei Schritt e) durchgeführt wird durch Bestimmen eines Zeitstempels betreffend:

Erfassen einer HTTP-GET-Anfrage von dem ersten HAS-Client betreffend das Segment; und/oder
Erfassen eines HTTP-Headers, der einen Übertragungsstart des Segments an den ersten HAS angibt; und/oder
Empfangen des letzten Bytes des Segments, wobei eine Größe des Segments aus dem HTTP-Header extrahiert wird;
und Subtrahieren des maximalen Pufferfüllpegels des ersten HAS-Clients von diesem Zeitstempel.

4. Verfahren nach einem beliebigen der vorstehenden Ansprüche, umfassend das gleichzeitige Bestimmen des Pufferfüllpegels für eine Vielzahl von unterschiedlichen HAS-Clients.

5. Verfahren nach einem beliebigen der vorstehenden Ansprüche, wobei Schritt d) Folgendes umfasst:

Erhalten einer Log-Datei von dem CDN, wobei die besagte Log-Datei Einträge umfasst, die Segmenten eine Zeit zuordnen, zu der diese Segmente von jedem der Vielzahl von HAS-Clients angefordert und/oder heruntergeladen wurden.

6. Verfahren nach einem beliebigen der vorstehenden Ansprüche, wobei Informationen hinsichtlich des vorausbestimmten Maximalfüllpegels zwischen dem CDN und einem HAS-Client kommuniziert werden, wobei das Verfahren weiterhin das entfernte Bestimmen des vorausbestimmten Maximalfüllpegels durch Erfassen dieser Informationen umfasst.

7. Verfahren nach einem beliebigen der vorstehenden Ansprüche, wobei der vorausbestimmte Maximalfüllpegel für jeden der Vielzahl von HAS-Clients identisch ist.

8. Verfahren nach Anspruch 6 oder 7, wobei der Maximalfüllstand als Teil der Manifest-Datei kommuniziert wird und/oder als voreingestellte Information bereitgestellt wird.

9. Verfahren nach einem beliebigen der vorstehenden Ansprüche, wobei die Berechnung des Pufferfüllpegels des entfernten HAS-Clients zur Ferndurchführung von Erlebnisqualitäts-, QoE-, Messungen verwendet wird.

10. Verfahren nach Anspruch 9, weiterhin umfassend das Erhalten einer zuvor erzeugten Manifest-Datei, wobei die besagte Manifest-Datei eine Liste von herunterzuladenden Segmenten und Auflösungsinformationen umfasst, die die Auflösung und/oder Bitrate, in der die Segmente verfügbar sind, und Informationen hinsichtlich der Uniform Resource Locators, URL, angeben, die für den Zugriff auf diese Segmente zu verwenden sind, wobei das Verfahren weiterhin Folgendes umfasst:

Erfassen von HTTP-GET-Anfragen von dem zu kennzeichnenden HAS-Client und/oder Erhalten einer Log-Datei von dem CDN, um die Segmente und die Auflösung und/oder Bitrate davon zu identifizieren;
Wiederherstellen des Stroms wie beim zu kennzeichnenden HAS-Client wahrgenommen, unter Verwendung der identifizierten Segmente und des berechneten Pufferfüllpegels; und
Durchführen einer QoE-Messung am wiederhergestellten Strom.

11. Verfahren nach Anspruch 10, umfassend das gleichzeitige Durchführen der QoE-Messung für eine Vielzahl von unterschiedlichen HAS-Clients und das Verwenden der Informationen aus diesen QoE-Messungen, um den verfügbaren Cache-Speicher und/oder die Bandbreite in dem CDN anzupassen.

12. Knoten für ein lineares Unicast-Fernseh-, TV-, Netz, das ein Inhaltsauslieferungsnetz, CDN, oder einen Inhaltsserver mit einer Vielzahl von Hypertext-Übertragungsprotokoll-Adaptive-Streaming-, HAS-, Clients verbindet, wobei der besagte Knoten kommunikativ an das Netz gekoppelt ist, damit er Pakete in dem Netz erfassen kann, wobei der besagte Knoten vorzugsweise eine Paketerfassungseinheit zum Erfassen von Paketen auf einer TCP- oder HTTP-Ebene und/oder eine CDN-Log-Datei-Eingangseinheit zum Erhalten einer CDN-Log-Datei umfasst, wobei der Knoten weiterhin einen Prozessor umfasst, der zum Durchführen des Verfahrens nach einem beliebigen der vorstehenden Ansprüche ausgelegt ist.

**Revendications**

1. Procédé de reconstruction à distance d'un niveau de remplissage du tampon d'un client de diffusion en continu adaptative de protocole de transfert hypertexte, HAS, dans un réseau de télévision, TV, linéaire de monodiffusion qui connecte un réseau de distribution de contenu, CDN, ou un serveur de contenu à une pluralité de clients HAS, dans lequel ledit CDN ou serveur de contenu est configuré pour générer des fichiers vidéo séparés pour différents segments temporels d'un flux de contenu, chaque fichier vidéo étant offert aux clients HAS dans une variété de différents débits de données de codage, ledit fichier vidéo constituant un segment dudit flux de contenu, dans lequel chaque client HAS utilise un tampon respectif ayant un niveau de remplissage maximum prédéterminé, le procédé étant **caractérisé en ce que** le procédé comprend les étapes suivantes :

   a) surveiller un trafic de réseau durant la période « t » ;
   b) détecter un état stable dans lequel le client HAS télécharge des segments dudit flux de contenu à la même vitesse que la vitesse de lecture de segments préalablement téléchargés dudit flux de contenu ;
   c) tout en étant en état stable, commencer, à un point de départ de la période « to », la surveillance dudit client HAS en déterminant pour le client HAS quel segment dans le flux de contenu est actuellement demandé, est en cours de téléchargement ou a été téléchargé le plus récemment ;
   d) déterminer quel client HAS parmi la pluralité de clients HAS a téléchargé ou a demandé en premier le segment déterminé ;
   e) calculer une chronologie de production pour des segments du flux de contenu sur la base de l'heure à laquelle le premier client HAS a téléchargé ou a demandé le segment, dans lequel la chronologie de production représente l'heure à laquelle les segments du flux de contenu sont censés être produits ou rendus disponibles dans le CDN ou le serveur de contenu ;
   f) déterminer un délai de récupération $R_d$ pour le segment en soustrayant l'heure à laquelle ce segment est produit, obtenu à partir de la chronologie de production, de l'heure à laquelle le segment est demandé par le client HAS, est en cours de téléchargement dans le client HAS ou a été téléchargé le plus récemment dans le client HAS à caractériser ;
   g) calculer l'état stable sans le délai de gel à to en utilisant :

$$F_0 = R_d$$

le procédé comprenant en outre les étapes suivantes :

   h) après le point de départ dans le temps « $t > t_0$ », déterminer le délai de récupération $R_d$ pour un segment en soustrayant, en utilisant la chronologie de production, l'heure à laquelle ce segment est produit de l'heure à laquelle le segment est demandé par le client HAS, est en cours de téléchargement dans le client HAS ou a été téléchargé le plus récemment dans le client HAS ;
   i) déterminer que la lecture au niveau du client HAS se fige lorsque le délai de récupération calculé dépasse la somme de l'état stable moins le délai de gel et du niveau de remplissage maximum prédéterminé « Δ » du client HAS et accumuler la durée durant laquelle la lecture est figée en tant que délai de gel accumulé « F » ;

j) déterminer un numéro de séquence de segment pour chaque segment téléchargé, ledit numéro de séquence indiquant une position dudit segment dans le flux de contenu, et déterminer que la lecture au niveau du HAS saute lorsqu'un saut dans les numéros de séquence de segment est détecté entre des segments téléchargés consécutivement et déterminer la quantité de saut de lecture à partir d'informations de synchronisation et/ou de numéros de séquence correspondant aux segments, et accumuler le délai de saut de la lecture en tant que délai de saut accumulé « S »

k) calculer le niveau de remplissage du tampon « B » en fonction du temps en utilisant la formule :

$$B(t) = \Delta + (F(t)+F_0) - R_d(t) - S(t)$$

dans laquelle F(t) représente la quantité de gel accumulée après to.

2. Procédé selon la revendication 1, dans lequel la détermination de l'heure à laquelle un segment est demandé par le client HAS, est en cours de téléchargement dans le client HAS ou a été téléchargé le plus récemment dans le client HAS est calculée en utilisant une estampille temporelle se rapportant à :

la capture d'une requête HTTP-GET à partir du client HAS se rapportant au segment ; et/ou
la capture d'un en-tête HTTP indiquant un début de transfert du segment vers le client HAS et/ou
la réception du dernier octet du segment, dans lequel une taille du segment est extraite de l'en-tête HTTP.

3. Procédé selon la revendication 1 ou 2, dans lequel l'étape e) est exécutée en déterminant une estampille temporelle se rapportant à :

la capture d'une requête HTTP-GET à partir du premier client HAS se rapportant au segment ; et/ou
la capture d'un en-tête HTTP indiquant un début de transfert du segment vers la première HAS, et/ou
la réception du dernier octet du segment, dans lequel une taille du segment est extraite de l'en-tête HTTP ;
et la soustraction du niveau de remplissage du tampon maximum du premier client HAS de cette estampille temporelle.

4. Procédé selon l'une quelconque des revendications précédentes, comprenant la détermination simultanée du niveau de remplissage du tampon pour une pluralité de clients HAS différents.

5. Procédé selon l'une quelconque des revendications précédentes, dans lequel l'étape d) comprend :

l'obtention d'un fichier journal à partir du CDN, ledit fichier journal comprenant des entrées qui associent des segments à l'heure à laquelle ces segments ont été demandés par chaque client parmi la pluralité de clients HAS et/ou téléchargés dans chaque client parmi la pluralité de clients HAS.

6. Procédé selon l'une quelconque des revendications précédentes, dans lequel des informations concernant le niveau de remplissage maximum prédéterminé sont communiquées entre le CDN et un client HAS, le procédé comprenant en outre la détermination à distance du niveau de remplissage maximum prédéterminé en capturant ces informations.

7. Procédé selon l'une quelconque des revendications précédentes, dans lequel le niveau de remplissage maximum prédéterminé est identique pour chaque client parmi la pluralité de clients HAS.

8. Procédé selon la revendication 6 ou 7, dans lequel le niveau de remplissage maximum est communiqué en tant que partie du fichier manifeste et/ou est fourni en tant qu'informations prédéfinies.

9. Procédé selon l'une quelconque des revendications précédentes, dans lequel le calcul du niveau de remplissage du tampon du client HAS distant est utilisé pour réaliser à distance des mesures de qualité d'expérience, QoE.

10. Procédé selon la revendication 9, comprenant en outre l'obtention d'un fichier manifeste généré précédemment, ledit fichier manifeste comprenant une liste de segments à télécharger et des informations de résolution indiquant la résolution et/ou le débit binaire dans lesquels les segments sont disponibles et des informations concernant les localisateurs de ressources uniformes, URL, à utiliser pour accéder à ces segments, le procédé comprenant en outre :

la capture de requêtes HTTP-GET à partir du client HAS à caractériser et/ou l'obtention d'un fichier journal à partir du CDN pour identifier les segments et la résolution et/ou le débit binaire de ceux-ci ;

la reconstruction du flux tel que perçu au niveau du client HAS à caractériser en utilisant les segments identifiés et le niveau de remplissage du tampon calculé ; et

la réalisation d'une mesure QoE sur le flux reconstruit.

11. Procédé selon la revendication 10, comprenant la réalisation de la mesure QoE simultanément pour une pluralité de clients HAS différents, et l'utilisation d'informations de ces mesures QoE pour ajuster un stockage en antémémoire et/ou une bande passante disponible(s) dans le CDN.

12. Noeud pour un réseau de télévision, TV, linéaire de monodiffusion qui connecte un réseau de distribution de contenu, CDN, ou un serveur de contenu à une pluralité de clients de diffusion en continu adaptative de protocole de transfert hypertexte, HAS, ledit noeud étant couplé en communication au réseau pour lui permettre de capturer des paquets dans le réseau, ledit noeud comprenant de préférence une unité de capture de paquets pour capturer des paquets au niveau de TCP ou de HTTP, et/ou une unité d'entrée de fichier journal du CDN pour obtenir un fichier journal du CDN, le noeud comprenant en outre un processeur qui est configuré pour exécuter le procédé tel que décrit dans l'une quelconque des revendications précédentes.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012156224 A